# EUROPEAN PATENT SPECIFICATION

(11) **EP 4 323 082 B1**
(45) Date of publication and mention of the grant of the patent: **17.07.2024**
(21) Application number: 22727976.7
(22) Date of filing: 12.04.2022
(51) Int. Cl.: B01D 45/08, B01D 21/00, B01D 47/02

(54) **COLUMN COLLECTOR AND METHOD FOR SEPARATING SOLID PARTICLES FROM LIQUID DROPLETS IN AEROSOL**
SÄULENABSCHEIDER UND VERFAHREN ZUR ABSCHEIDUNG FESTER TEILCHEN VON FLÜSSIGKEITSTRÖPFCHEN IN AEROSOLEN
COLLECTEUR A COLONNE ET PROCEDE DE SEPARATION DES PARTICULES SOLIDES DES GOUTTELETTES DE LIQUIDE DANS UN AEROSOL

(30) Priority: 13.04.2021 PL 43756721
(43) Date of publication of application: 21.02.2024
(73) Proprietor: International Tobacco Machinery Poland Sp. z o.o., 26-600 Radom (PL)
(72) Inventor: SIERADZKI, Pawel, 26-600 Radom (PL)
(74) Representative: Markieta, Jaroslaw Franciszek
(86) International application number: PCT/IB2022/053404
(87) International publication number: WO 2022/219512

(56) References cited:
- US-A- 2 271 401
- US-A- 3 892 550
- US-A- 5 427 610
- US-A1- 2018 337 027

## Description

The object of the invention is a column collector for separating solid particles from liquid droplets in an aerosol, and a method for separating solid particles from liquid droplets in the aerosol by means of a column collector.

The invention is used in production processes where it is necessary to separate solid particles from the gas flow carrying droplets of a solution, e.g. in the case of processes for discharging the aerosol remaining after wet coating processes.

Methods for separating solid particles from aerosols using turbulent flows are known from the prior art. The general principle of such apparatuses is to convert the kinetic energy of the aerosol and the particles suspended in the aerosol into thermal energy during collisions with the walls of the separator so that the solid particles can fall to the bottom of the separator under the force of gravity. The kinetic energy of the particles can also be collected by means of heat exchangers.

Such solutions can also be applied to aerosols in the form of mists in which vapour particles or liquid droplets lose their energy on collisions with the walls of the apparatus or condense on the cooling elements and flow to the bottom of the apparatus in liquid form.

From the publication DE3637892A1, there is known a flue gas scrubber which contains a baffled chamber which generates turbulent flow and receives the kinetic energy of solid particles suspended in flue gases, in addition the temperature of the flue gases is reduced by means of cooling coils which collects a large part of the kinetic energy from the flue gases and allow the vapours contained in the flue gases to condense to a liquid phase.

The patent GB402075 discloses a classical cleaning of flue gases from particles by kinetic interaction with the walls of a dedusting chamber. Particles carried in the flue gases or from another technological process collide with the baffles in the chamber and fall to the bottom of the chamber where they are collected by a screw conveyor outside for disposal.

The US2018/337027 is disclosing a column collector according to the pre-characterizing part of claim 1.

A technical problem encountered in the state-of-the-art solutions is their impaired separation efficiency for mist aerosols, particularly aerosols whose droplets are solutions.

The object of the invention is a column collector for separating solid particles from liquid droplets in an aerosol as in claim 1.

The object of the invention is a column collector for separating solid particles from liquid droplets in an aerosol, comprising: a chamber for flow of the aerosol provided with an inlet for the aerosol positioned in the lower part of the chamber and an outlet for the aerosol positioned in the upper part of the chamber. The chamber further comprises at least one heating element for heating the aerosol, forcing means for forcing the aerosol to flow in a direction from the inlet of the chamber to the outlet of the chamber, and movable baffles for drawing in and drawing out of the chamber and for depositing solid particles precipitated from the liquid droplets in the aerosol under the influence of temperature, the baffles being arranged one above the other. The chamber further comprises cleaning means for removing solid particles deposited on the movable baffles.

The collector according to the invention is characterized in that the movable baffles are arranged alternately one above another.

The collector according to the invention is characterized in that the movable baffles are adapted to regulate the aerosol flow path.

The collector according to the invention is characterized in that the baffles are arranged substantially perpendicular to the longitudinal axis of the chamber.

The collector according to the invention is characterized in that the forcing means for forcing the aerosol flow in the direction from the inlet to the outlet of the chamber are in the form of a suction device positioned at the outlet, in the upper part of the chamber, or a blower positioned at the inlet, in the lower part of the chamber.

The collector according to the invention is characterized in that the suction device positioned at the outlet, in the upper part of the chamber, is provided with a filter for cleaning the aerosol residue after the precipitation of the solid particles.

The collector according to the invention is characterized in that the heating elements are in the form of heaters fixed on the outer surface of the chamber, along the longitudinal axis of the chamber.

The collector according to the invention is characterized in that the cleaning means are in the form of a scraper or edges of slots positioned at the walls of the chamber and adapted to the size of the movable baffles.

The object of the invention is also a method for separating solid particles from liquid droplets in the aerosol as in claim 8.

The object of the invention is also a method for separating solid particles from liquid droplets in the aerosol by means of the column collector, comprising steps wherein the aerosol is introduced into the chamber of the collector through the inlet positioned in the lower part of the chamber, the aerosol is forced to flow in a direction from the inlet of the chamber to the outlet of the chamber positioned in the upper part of the chamber, and the aerosol is heated by means of at least one heating element. The method also comprises steps wherein the aerosol flow in conducted such that the solid particles precipitated from the aerosol are deposited on the movable baffles arranged alternately one above another in the chamber, whereas the aerosol residue is discharged by means of the outlet positioned in the upper part of the chamber and the solid particles deposited on the movable baffles are removed.

The method according to the invention is characterized in that the aerosol flow is forced by applying a vacuum to the outlet of the chamber.

The method according to the invention is characterized in that the aerosol is heated by means of heaters fixed on the outer surface of the chamber along the longitudinal axis of the chamber.

The method according to the invention is characterized in that the solid particles deposited on the movable baffles is removed by using cleaning means.

The method according to the invention is characterized in that the solid particles deposited on the movable baffles are removed by means of the edges of the slots positioned at the walls of the collector chamber, the dimensions of the slots being adapted to the size of the movable baffles.

The method according to the invention is characterized by comprising an additional step wherein flow path of the aerosol is regulated by means of the movable baffles arranged alternately.

The apparatus according to the invention has the advantage of efficiently separating solid particles dissolved in the solution of droplets suspended in a gas flow from the aerosol. A simple design allows a fast and efficient separation of solid particles dissolved in solution droplets using a crystallization process from the liquid phase with respect to aerosol in the form of a mist. Furthermore, the solution according to the invention provides quick and simple accumulation and removal of the accumulated solid particles from the chamber baffles.

The object of the invention is shown in more detail in a preferred embodiment in a drawing in which:
- Fig. 1: shows a column collector according to the first embodiment of the invention;
- Fig. 1A: shows the column collector according to the first embodiment of the invention with a drawn-out baffle;
- Fig. 2: shows the column collector according to the second embodiment of the invention;
- Fig. 3A: shows a section of the column collector according to another embodiment of the invention;
- Fig. 3B: shows a section of the column collector according to another embodiment of the invention;
- Fig. 3C: shows a section of the column collector according to another embodiment of the invention.
- Fig. 3D: shows a section of the column collector according to another embodiment of the invention.
- Fig. 4A: shows, in cross-section, a fragment of a collector chamber according to the invention with heating elements integrated in the walls of the chamber;

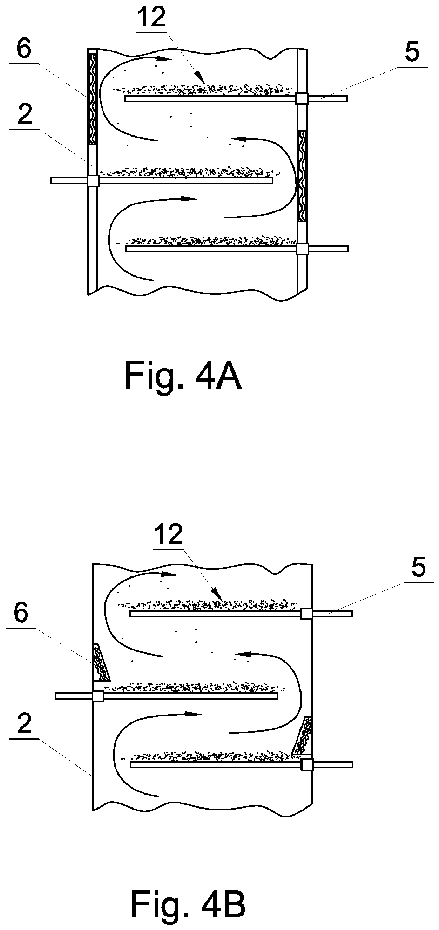

- Fig. 4A: shows, in cross-section, a fragment of the collector chamber according to the invention with the heating elements inside the chamber;

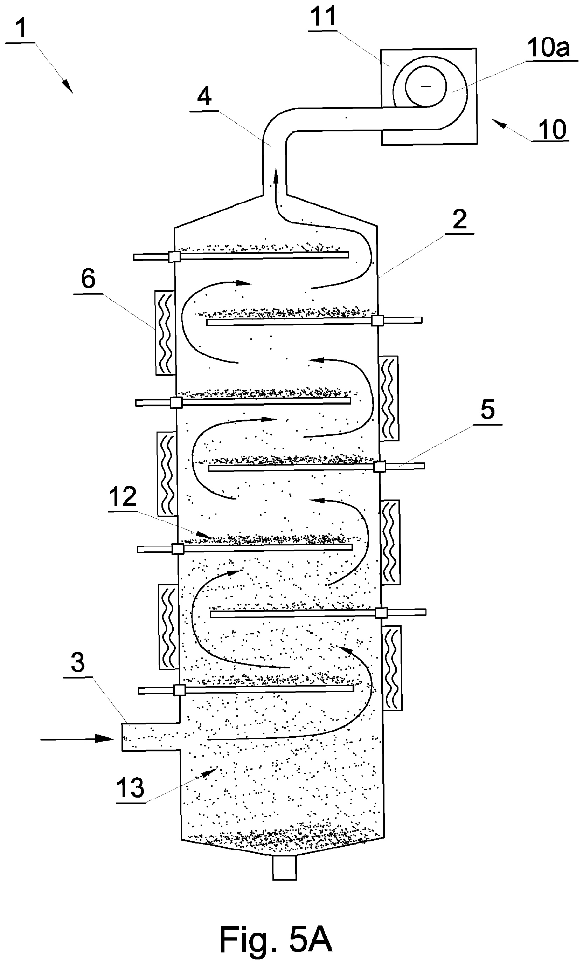

- Fig. 5A: shows, in cross-section, the collector according to the invention with suction elements forcing the flow;

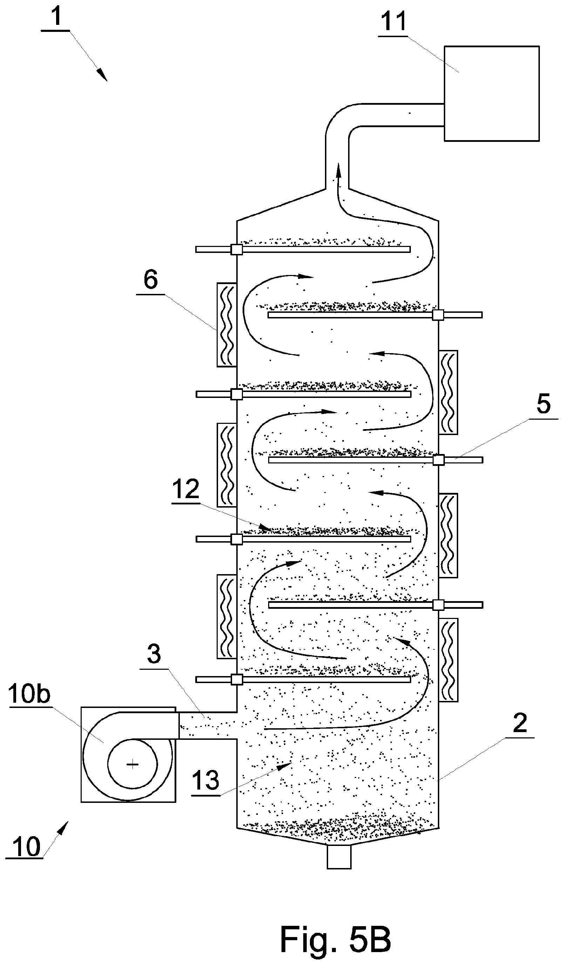

- Fig. 5B: shows, in cross-section, the collector according to the invention with blowing in elements forcing the flow;

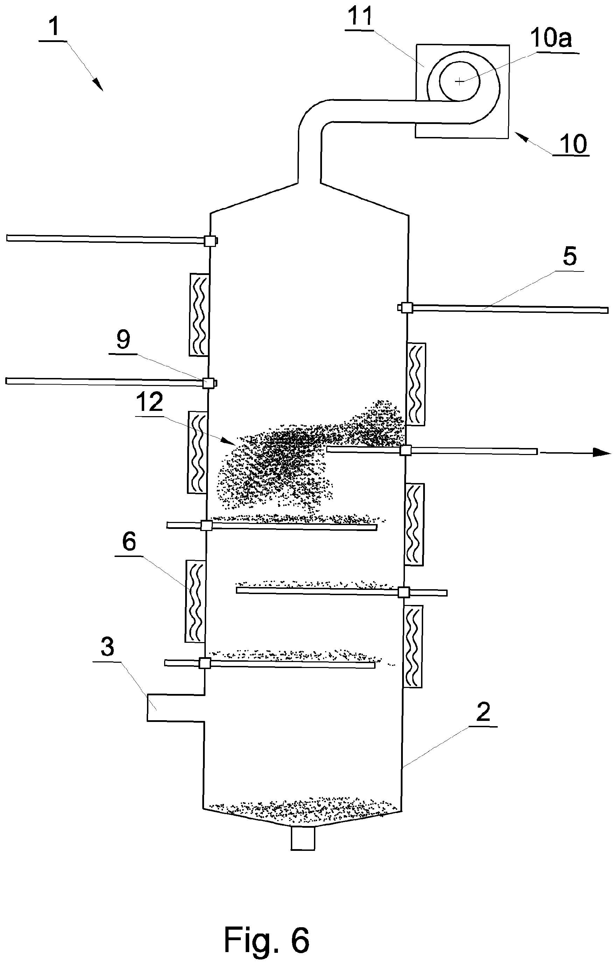

- Fig. 6: shows the collector according to the invention during the removal of separated solid particles.

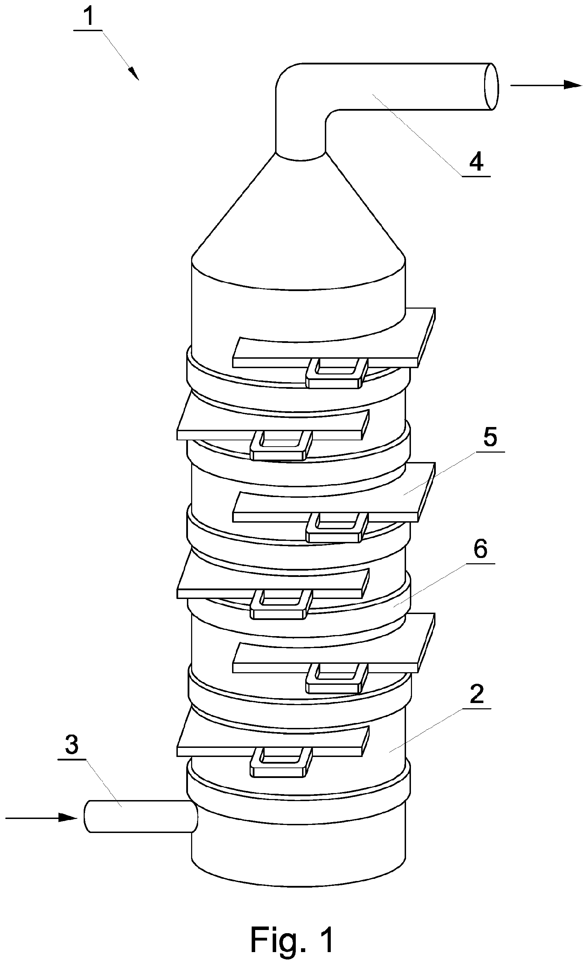

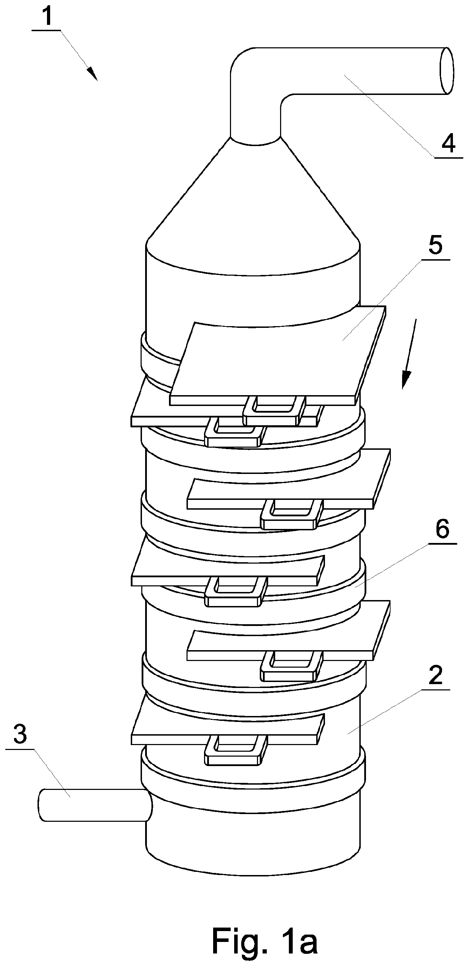

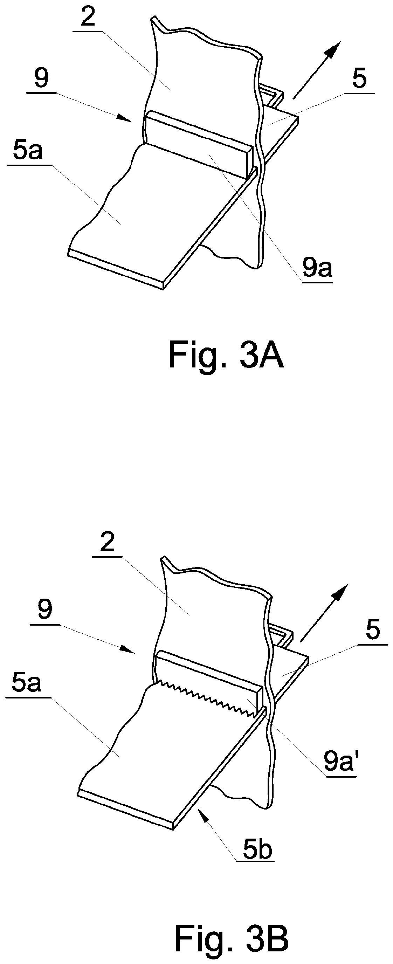

Fig. 1 shows a collector 1 according to the first embodiment of the invention. A column collector 1 for separating solid particles 12 from liquid droplets in an aerosol 13, comprising: a chamber 2 for the aerosol 13 flow provided with an inlet 3 for the aerosol 13 positioned in the lower part of the chamber 2 and an outlet 4 for the aerosol 13 positioned in the upper part of the chamber 2. The chamber 2 has at least one heating element 6 for heating the aerosol 13 flowing through the chamber 2, forcing means 10 (Fig.5A-6) for forcing the aerosol 13 to flow in a direction from the inlet 4 of the chamber 2 to the outlet 4 of the chamber 2, movable baffles 5 for drawing in and drawing out of the chamber 2 and for depositing solid particles 12 precipitated from the liquid droplets in the aerosol 13 under the influence of temperature, the baffles 5 being positioned one above another, cleaning means 9 (shown in Fig.3A and Fig.3B) for removing the solid particles 12 deposited on the movable baffles 5.

In the embodiment of Fig. 1, the chamber 2 of the collector 1 has the form of an oval column, however, it is possible to use a different section, for example square or rectangular. It is also possible to arrange the column of the collector 1 obliquely, for example with the longitudinal axis of the column 2 positioned at an angle in the range of 45-90 degrees. In such an embodiment, it is important to position the outlet 4 above the inlet 3.

According to the preferred embodiment, the collector 1 is provided with movable baffles 5 arranged alternately one above another so as to enable the aerosol flow path 13 to be regulated. The alternate arrangement of the baffles 5 means that the flow inside the chamber 1 is directed alternately to the left and then to the right, or in a forward or backward direction or in a combination of these directions through the successively arranged baffles 5 inside the chamber 2 of the collector 1. Such arrangement of the baffles 5 creates a longer aerosol flow path 13 along which the aerosol flows around all surfaces of the baffles 5, i.e. the upper surface 5A and the lower surface 5B. In turn, the extension of the aerosol flow path 13 results in an increase of the running time of the entire process. Moreover, the length of the flow path inside the chamber 2 may be adjusted by drawing the baffles 5 in or out, whereas the baffles 5 may be drawn in or drawn out completely or partially, which allows creating a flow path being variable in a large range and having a complex shape. The length of the flow path of the aerosol 13 inside the chamber 2 and the flow time must be selected so that the aerosol 13 can be heated to the required temperature at which the process of precipitation of the solid particles 12 from the aerosol 13 droplets will take place. The aerosol 13 may comprise droplets of water glass which is used to harden and/or seal various types of surfaces, consequently also increasing their water resistance. Other media providing similar hardening and/or sealing effects may also be used instead of water glass. In order to precipitate the solid particles 12 from the aerosol 13, it is preferred to heat the aerosol flowing through the chamber to a temperature in the range of 60 -100°C, preferably of 70-90°C.

The upper surfaces 5A and the lower surfaces 5B of the baffles 5 are shown as flat, however, it is possible to arrange longitudinal fluting on them to increase the surfaces of the baffles 5. Such fluting should run in the direction of drawing the baffles 5 out of the chamber 2. The baffles 5 may contain openings which constitute an alternative flow path increasing the turbulence of the flow, in one the alternative embodiments the baffles 5 occupy the entire cross-sectional area of the chamber 2, and the entire flow is directed through the openings made in the baffles 5.

The baffles 5 are movable in a direction substantially perpendicular to the longitudinal axis of the chamber 2, which allows adjusting the flow path, but also allows an effective removal of the solid particles 12 deposited on the surfaces of the baffles 5. As a result of drawing the baffles 5 out of the chamber 2, the accumulated solid particles 12 are pushed down from one baffle onto a baffle below or onto the bottom of the chamber 2 from where they are discharged in a conventional manner, e.g. using a screw conveyor or manually. In the event that the solid particles 12 become permanently deposited on the surfaces 5A and 5B of the baffles 5, when drawing the baffles 5 out of the chamber 2, they will be scraped off the surfaces of the baffles 5 by the edge 14 of the opening 9b of the wall of the chamber 2 or by dedicated cleaning means 9 attached to the walls of the chamber 2. Where the solid particles 12 do not permanently adhere to the baffles 5, the function of the cleaning means 9 is performed by the wall of the chamber 2 acting as a scraper, and the edge 14 of the slot 9b through which the baffle 5 is inserted into the chamber 2.

In a preferred embodiment, the collector 1 according to the invention is provided with the baffles 5 arranged so that they are substantially perpendicular to the longitudinal axis of the chamber 2. However, other mounting angles of the baffles 5 are possible and can be determined through appropriate optimization operations. Perpendicular mounting allows a uniform accumulation of the deposited material on the surfaces of the baffles 5.

Furthermore, the collector 1 according to the embodiment is provided with forcing means 10 for forcing the flow of the aerosol 13 in the direction from the inlet 3 to the outlet 4 of the chamber 2, having the form of a suction device 10a positioned at the outlet 4 for the aerosol 13 positioned in the upper part of the chamber 2 as shown in Fig. 5A, or a blower 10b positioned at the inlet 3 for the aerosol 13 in the lower part of the chamber 2 as shown in Fig. 5B. The suction device 10a positioned at the outlet 4 for the aerosol 13 in the upper part of the chamber 2 can be provided with a filter 11 for cleaning the residue of the aerosol 13 after the precipitation of the particles 12, thus performing a double function. It is also possible to build an embodiment wherein a combination of a suction device 10a at the outlet 4 and a blower 10b at the inlet 3 is used. The filter 11 may be fixed at the outlet 4 also in a configuration where a blower at the inlet 3 is used.

The time of flow of the aerosol 13 through the chamber 2, in addition to being adjustable by lengthening or shortening the flow path between the baffles 5, can also be adjusted by the suction force of the suction device 10a or by the blowing force of the blower 10b. Preferably, the suction value at the outlet 4 of the chamber 2 is in the range of 50 - 100 millibar. An embodiment is also possible wherein the collector 1 according to the invention is provided with a system for heating the surface of the movable baffles 5. In addition to heating the baffles 5, the collector 1 according to the invention is provided with heating elements 6 in the form of heaters fixed on the outer surface of the chamber 2, along the longitudinal axis of the chamber 2. It should be noted that in other embodiments the heating elements may be integrated in the wall of the chamber 2 as shown in Fig. 4A or protrude into the chamber 2 as shown in Fig. 4B. The heating elements arranged on the walls of the chamber 2 may be assisted or replaced by heaters of air blown into the chamber 2, radiant heaters positioned at a certain distance from the walls of the chamber 2 or gas burners, each of these elements increasing the temperature inside the chamber 2 being considered as equally effective form of heating means 6. It is preferred to heat the chamber to a temperature in the range of 60 -100°C, preferably 70-90°C.

The collector 1 according to another preferred embodiment is provided with the cleaning means 9 having the form of a scraper 9a, 9a' or slots 9b positioned in the walls of the chamber 2 of the collector 1, adapted to the size of the movable baffles 5 having a scraping edge 14.

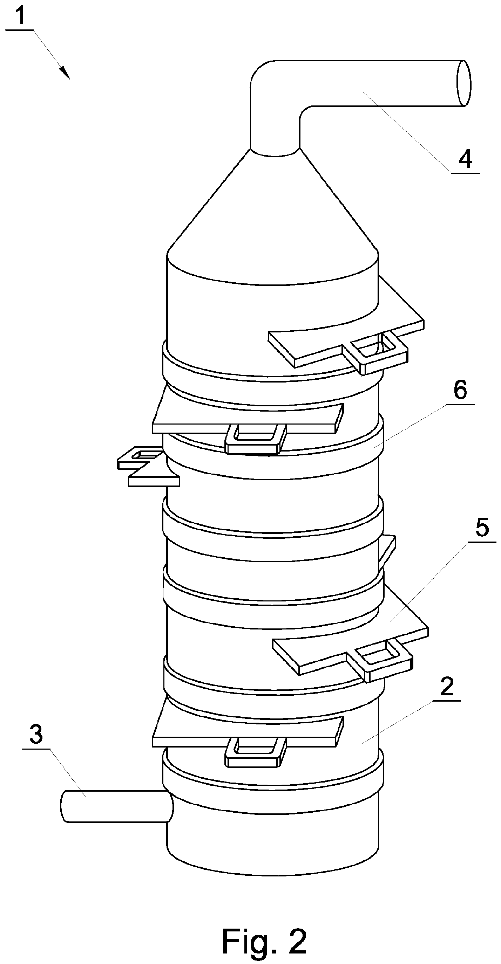

Fig. 2 shows the collector 1 according to a preferred embodiment with an oval cross-section and with baffles 5 arranged one above another with angular displacement around the longitudinal axis of the chamber 2. Similar to the embodiment of Fig. 1, a turbulent flow flowing around the baffles 5 on the side of their upper surface 5A and lower surface 5B is created.

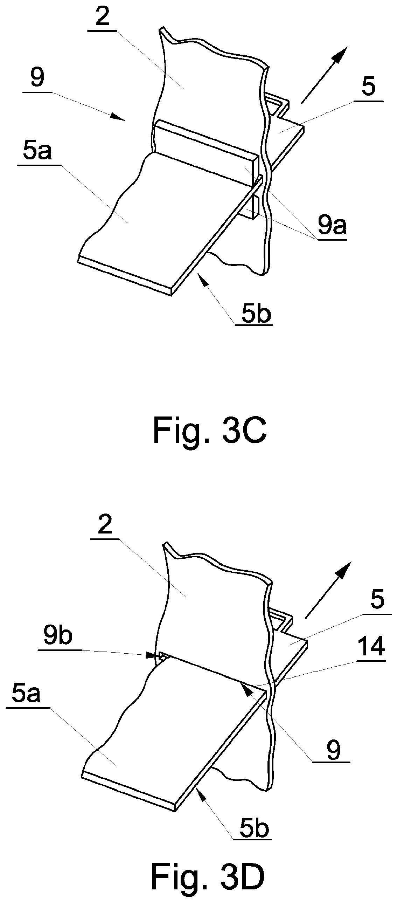

Figs. 3A and 3B show a section of the column collector 1 according to another embodiment of the invention, with additional cleaning means 9a, 9a' visible. The additional cleaning means 9 improve the scraping efficiency of the solid particles 12 that have adhered to the surface of the baffles 5. Figs. 3A and 3B show the cleaning means dedicated to the upper surfaces 5A of the baffles 5, however, the cleaning means 9a, 9a' may also be installed so as to act on the solid particles 12 that have adhered to the lower surfaces 5B of the baffles 5 or in a configuration where they act on the solid particles 12 on both surfaces 5A and 5B of the baffles 5, then they adopt a doubled configuration i.e. the cleaning means 9 are positioned both above and below the baffles 5 as shown in Fig. 3C. The cleaning means 9 may be in the form of a sharp-edged plate made of a material of high hardness, or may have a structure provided with teeth or rollers crushing the layer of the solid particles 12 adhering to the surfaces 5A, 5B of the baffles 5. In the case of the cleaning means 9 acting on the solid particles 12 deposited on the upper surface 5A of the baffle 5, the front wall of the means 9a, 9a' is also a scraper that pushes off the solid particles 12 when the baffle 5 is drawn out of the chamber 2.

Along with the column collector 1, there was introduced a method of separating the solid particles 12 from liquid droplets in the aerosol 13 by means of the column collector 1 comprising steps wherein the aerosol 13 is introduced into the chamber 2 of the column collector 1 via the inlet 3 positioned in the lower part of the chamber 2, the aerosol 13 is forced to flow in a direction from the inlet 3 of the chamber 2 to the outlet 4 of the chamber 2 positioned in the upper part of the chamber 2, the aerosol 13 is heated by at least one heating element 6, the aerosol 13 is directed to flow so that the solid particles 12 precipitated from aerosol 13 are deposited on the movable baffles 5 arranged alternately one above another in the chamber 2, whereas the aerosol 13 residue is discharged via the outlet 4 positioned in the upper part of the chamber 2, the solid particles 12 deposited on the movable baffles 5 are removed.

In a preferred embodiment of the method, the flow of the aerosol 13 is forced by applying a vacuum from a suction device 10a to the outlet 4 of the chamber 2. It is also possible to force the flow by using a blower 10b or a combination of the suction means 10a and the blower 10b.

In a preferred embodiment of the method according to the invention, the aerosol 13 is heated by means of heaters 6 fixed on the outer surface of the chamber 2 along the longitudinal axis of the chamber 2. However, the heating step can also be carried out by other means mentioned above in relation to the design of the collector 2, as well as by differently fixed means, for example means integrated into the chamber 2 as shown in Fig. 4A. Preferably, the heating elements 6 may be in the form of radiant heaters, burners or other heat generating sources fixed inside the chamber 2. Heating of the aerosol 13 leads to an increase in the concentration of the solution in the aerosol droplets 13 above the concentration of a saturated solution, resulting in crystallization of the solid particles 12 dissolved in the solution. Continued heating causes a substantial or complete reduction of the solvent, e.g. water, and results in leaving in the aerosol the solid particles 12 which accumulate on the baffles 5 of the collector 1.

In a preferred embodiment of the method according to the invention, the solid particles 12 deposited on the movable baffles 5 are removed by the cleaning means 9. As shown in Fig. 6, by drawing the baffle 5 out of the chamber 2, the accumulated solid particles 12 rest against the front surface of the cleaning means 9 and/or the wall of the chamber 2 and are poured down the chamber 2. During the pouring operation, the flow forcing means 10 remain switched off or run at idle or at minimum flow.

In a preferred embodiment of the method according to the invention, the solid particles 12 deposited on the movable baffles 5 are removed by means of the edges 14 of the slots 9b positioned in the walls of the chamber 2 of the collector 1, whereas the dimensions of the slots 9b are adapted to the size of the movable baffles 5. Adaptation means that the dimensions of the slots 9b are adjusted to the size of the movable baffles 5 in such a way as to allow the baffle 5 to slide freely in and out of the chamber 2 and to ensure the required tightness so that the aerosol does not escape through the slots 9b outside of the chamber 2. The collecting function is performed by the edge 14 of the slots 9b and the wall surface of the chamber 2, as shown in the configuration in Fig. 3D, or the front surface of the additional cleaning means 9a. 9a' in the configurations shown in Figs. 3A, 3B, 3C. Furthermore, in the shown embodiments of the collector 1, the edge 14 scraping the solid particles 12 from the baffles 5 is positioned in the walls of the chamber 2. It is also possible to build an embodiment wherein the edge 14 scraping the solid particles 12 is arranged in an element sealing the slot 9b or in a guide (not shown in Fig.) inserting the baffles 5 into the chamber 2. The scraping edge 14 will be any edge that first comes into contact with the solid particles 12 deposited on the baffles 5 and scrapes them from the surface of the baffle 5.

According to another embodiment of the method according to the invention, an additional step is introduced wherein the path of flow of the aerosol 13 is regulated by means of the movable baffles 5 arranged alternately one above another. The regulation is carried out by fully or partially drawing the baffles 5 in or out of the chamber 2. The adjustment of the flow path can be carried out before starting the collector 1 and also during its operation.

## Claims

1. A column collector (1) for separating solid particles (12) from liquid droplets in an aerosol (13), comprising:
a chamber (2) for flow of the aerosol (13) provided with an inlet (3) for the aerosol (13) positioned in the lower part of the chamber (2) and an outlet (4) for the aerosol (13) positioned in the upper part of the chamber (2), whereas the chamber (2) comprises
at least one heating element (6) for heating the aerosol (13),
forcing means (10) for forcing the aerosol (13) to flow in a direction from the inlet (3) of the chamber (2) to the outlet (4) of the chamber (2),
movable baffles (5) for drawing in and drawing out of the chamber (2) and for depositing solid particles (12) precipitated from the liquid droplets in the aerosol (13) under the influence of temperature, the baffles (5) being arranged one above another,
cleaning means (9) for removing solid particles (13) deposited on the movable baffles (5)
**characterized in that**
the cleaning means (9) are in the form of a scraper (9a, 9a') or edges (14) of slots (9b) positioned at the walls of the chamber (2) and adapted to the size of the movable baffles (5).

2. The collector as in claim 1, **characterized in that** the movable baffles (5) are arranged alternately one above another.

3. The collector as in claim 1 or 2, **characterized in that** the movable baffles (5) are adapted to regulate flow path of the aerosol (13).

4. The collector as in claims 1, 2 or 3, **characterized in that** the baffles (5) are arranged perpendicular to the longitudinal axis of the chamber (2).

5. The collector as in claims 1, 2, 3 or 4, **characterized in that** the forcing means (10) for forcing the aerosol (13) flow in the direction from the inlet (3) to the outlet (4) of the chamber (2) are in the form of a suction device (10a) positioned at the outlet (4), in the upper part of the chamber (2) or a blower (10b) positioned at the inlet (3), in the lower part of the chamber (2).

6. The collector as in claim 5, **characterized in that** the suction device (10a) positioned at the outlet (4), in the upper part of the chamber (2), is provided with a filter (11) for cleaning the aerosol (13) residue (13) after the precipitation of the solid particles (12).

7. The collector as in any of the preceding claims, **characterized in that** the heating elements (6) are in the form of heaters fixed on the outer surface of the chamber (2), along the longitudinal axis of the chamber (2).

8. A method of separating solid particles (12) from liquid droplets in the aerosol (13) by means of a column collector (1) according to one of the preceding claims; comprising steps wherein
the aerosol (13) is introduced into the chamber (2) of the collector (1) through the inlet (3) positioned in the lower part of the chamber (2),
the aerosol (13) is forced to flow in a direction from the inlet (3) of the chamber (2) to the outlet (4) of the chamber (2) positioned in the upper part of the chamber (2),
the aerosol (13) is heated by at least one heating element (6),
the aerosol (13) flow is conducted such that the solid particles (12) precipitated from the aerosol (13) are deposited on the movable baffles (5) arranged alternately one above another in the chamber (2), whereas
the aerosol (13) residue is discharged by means of the outlet (4) positioned in the upper part of the chamber (2),
and the solid particles (12) deposited on the movable baffles (5) are removed
**characterized in that**
the solid particles (12) deposited on the movable baffles (5) are removed by means of the edges (14) of the slots (9b) positioned at the walls of the chamber (2) of the collector (1), the dimensions of the slots (9b) being adapted to the size of the movable baffles (5).

9. The method as in claim 8, **characterized in that** flow of the aerosol (13) is forced by applying vacuum to the outlet (4) of the chamber (2).

10. The method as in claim 8 or 9, **characterized in that** the aerosol (13) is heated by means of heaters (6) fixed on the outer surface of the chamber along the longitudinal axis of the chamber.

11. The method as in claims 8, 9 or 10, **characterized in that** the solid particles (12) deposited on the movable baffles (5) are removed by using cleaning means (9).

12. The method as in any of the preceding claims, **characterized by** comprising an additional step wherein the flow path of the aerosol (13) is regulated by means of the movable baffles (5) arranged alternately.

## Patentansprüche

1. Säulensammler (1) zum Trennen von Feststoffpartikeln (12) von Flüssigkeitströpfchen in einem Aerosol (13), umfassend:
eine Kammer (2) für den Durchfluss des Aerosols (13), die mit einem im unteren Teil der Kammer (2) angeordneten Einlass (3) für das Aerosol (13) und einem im oberen Teil der Kammer (2) angeordneten Auslass (4) für das Aerosol (13) ausgestattet ist, wobei die Kammer (2) Folgendes umfasst:
mindestens ein Heizelement (6) zum Erhitzen des Aerosols (13),
Antriebsmittel (10), um das Aerosol (13) dazu zu bringen, in einer Richtung vom Einlass (3) der Kammer (2) zum Auslass (4) der Kammer (2) zu fließen,
bewegliche Leitbleche (5) zum Ansaugen und Abziehen aus der Kammer (2) und zum Ablagern von aus den Flüssigkeitströpfchen im Aerosol (13) unter Temperatureinfluss abgeschiedenen Feststoffpartikeln (12), wobei die Leitbleche (5) übereinander angeordnet sind,
Reinigungsmittel (9) zum Entfernen von Feststoffpartikeln (13), die sich auf den beweglichen Leitblechen (5) abgelagert haben,
**dadurch gekennzeichnet, dass**
die Reinigungsmittel (9) die Form eines Abstreifers (9a, 9a') oder von Kanten (14) von Schlitzen (9b) haben, die an den Wänden der Kammer (2) angeordnet und an die Größe der beweglichen Leitbleche (5) angepasst sind.

2. Kollektor nach Anspruch 1, **dadurch gekennzeichnet, dass** die beweglichen Leitbleche (5) abwechselnd übereinander angeordnet sind.

3. Kollektor nach Anspruch 1 oder 2, **dadurch gekennzeichnet, dass** die beweglichen Leitbleche (5) geeignet sind, den Strömungsweg des Aerosols (13) zu regulieren.

4. Kollektor nach Anspruch 1, 2 oder 3, **dadurch gekennzeichnet, dass** die Leitbleche (5) senkrecht zur Längsachse der Kammer (2) angeordnet sind.

5. Kollektor nach Anspruch 1, 2, 3 oder 4, **dadurch gekennzeichnet, dass** die Antriebsmittel (10) zum Antreiben der Aerosolströmung (13) in die Richtung vom Einlass (3) zum Auslass (4) der Kammer (2) in Form einer Absaugvorrichtung (10a), die am Auslass (4) im oberen Teil der Kammer (2) angeordnet ist, oder eines Gebläses (10b), das am Einlass (3) im unteren Teil der Kammer (2) angeordnet ist, vorliegen.

6. Kollektor nach Anspruch 5, **dadurch gekennzeichnet, dass** die am Auslass (4) im oberen Teil der Kammer (2) angeordnete Absaugvorrichtung (10a) mit einem Filter (11) zum Reinigen der Aerosolrückstände (13) nach der Abscheidung der Feststoffpartikel (12) versehen ist.

7. Kollektor nach einem der vorhergehenden Ansprüche, **dadurch gekennzeichnet, dass** die Heizelemente (6) in Form von Heizkörpern ausgebildet sind, die an der Außenfläche der Kammer (2) entlang der Längsachse der Kammer (2) befestigt sind.

8. Verfahren zum Abtrennen von Feststoffpartikeln (12) von Flüssigkeitströpfchen im Aerosol (13) mittels eines Säulenkollektors (1) nach einem der vorhergehenden Ansprüche;
umfassend die Schritte, bei denen
das Aerosol (13) durch den im unteren Teil der Kammer (2) angeordneten Einlass (3) in die Kammer (2) des Sammlers (1) eingeführt wird,
das Aerosol (13) angetrieben wird, in einer Richtung vom Einlass (3) der Kammer (2) zum Auslass (4) der Kammer (2) zu fließen, der sich im oberen Teil der Kammer (2) befindet,
das Aerosol (13) durch mindestens ein Heizelement (6) erhitzt wird,
die Strömung des Aerosols (13) so geführt wird, dass die aus dem Aerosol (13) ausgeschiedenen Feststoffpartikel (12) auf den in der Kammer (2) abwechselnd übereinander angeordneten beweglichen Leitblechen (5) abgelagert werden, während der Rückstand des Aerosols (13) durch den im oberen Teil der Kammer (2) angeordneten Auslass (4) abgeführt wird,
und die Feststoffpartikel (12), die sich auf den beweglichen Leitblechen (5) ablagern, entfernt werden,
**dadurch gekennzeichnet, dass**
die auf den beweglichen Leitblechen (5) abgelagerten Feststoffpartikel (12) mittels der Kanten (14) der an den Wänden der Kammer (2) des Sammlers (1) angeordneten Schlitze (9b) entfernt werden, wobei die Abmessungen der Schlitze (9b) an die Größe der beweglichen Leitbleche (5) angepasst sind.

9. Verfahren nach Anspruch 8, **dadurch gekennzeichnet, dass** der Strömungsweg des Aerosols (13) durch Anlegen eines Vakuums an den Auslass (4) der Kammer (2) erzwungen wird.

10. Verfahren nach Anspruch 8 oder 9, **dadurch gekennzeichnet, dass** das Aerosol (13) mit Hilfe von Heizelementen (6) erhitzt wird, die an der Außenfläche der Kammer entlang der Längsachse der Kammer befestigt sind.

11. Verfahren nach Anspruch 8, 9 oder 10, **dadurch gekennzeichnet, dass** die Feststoffpartikel (12), die sich auf den beweglichen Leitblechen (5) abgelagert haben, mit Hilfe von Reinigungsmitteln (9) entfernt werden.

12. Verfahren nach einem der vorhergehenden Ansprüche, **dadurch gekennzeichnet, dass** es einen zusätzlichen Schritt umfasst, bei dem der Strömungsweg des Aerosols (13) mittels der abwechselnd angeordneten beweglichen Leitbleche (5) reguliert wird.

## Revendications

1. Collecteur à colonne (1) pour séparer des particules solides (12) de gouttelettes liquides dans un aérosol (13), comprenant :
une chambre (2) d'écoulement de l'aérosol (13) dotée d'une entrée (3) pour l'aérosol (13) positionnée dans la partie inférieure de la chambre (2) et d'une sortie (4) pour l'aérosol (13) positionnée en partie supérieure de la chambre (2), alors que la chambre (2) comprend
au moins un élément chauffant (6) pour chauffer l'aérosol (13),
des moyens de forçage (10) pour forcer l'aérosol (13) à s'écouler dans une direction allant de l'entrée (3) de la chambre (2) vers la sortie (4) de la chambre (2),
des chicanes mobiles (5) pour entrer et sortir de la chambre (2) et pour déposer des particules solides (12) précipitées à partir des gouttelettes de liquide dans l'aérosol (13) sous l'influence de la température, les chicanes (5) étant disposées l'une au-dessus d'un autre,
des moyens de nettoyage (9) pour éliminer les particules solides (13) déposées sur les chicanes mobiles (5)
**caractérisé en ce que**
les moyens de nettoyage (9) se présentent sous la forme d'un grattoir (9a, 9a') ou de bords (14) de fentes (9b) positionnées au niveau des parois de la chambre (2) et adaptées à la taille des chicanes mobiles (5).

2. Collecteur selon la revendication 1, **caractérisé en ce que** les chicanes mobiles (5) sont disposées alternativement les unes au-dessus des autres.

3. Collecteur selon la revendication 1 ou 2, **caractérisé en ce que** les déflecteurs mobiles (5) sont adaptés pour réguler le trajet d'écoulement de l'aérosol (13).

4. Collecteur selon les revendications 1, 2 ou 3, **caractérisé en ce que** les chicanes (5) sont disposées perpendiculairement à l'axe longitudinal de la chambre (2).

5. Collecteur selon les revendications 1, 2, 3 ou 4, **caractérisé en ce que** les moyens de forçage (10) pour forcer l'aérosol (13) à s'écouler dans la direction allant de l'entrée (3) vers la sortie (4) de la chambre (2 ) se présentent sous la forme d'un dispositif d'aspiration (10a) positionné à la sortie (4), en partie haute de la chambre (2) ou d'une soufflante (10b) positionnée à l'entrée (3), en partie basse de la chambre (2).

6. Collecteur selon la revendication 5, **caractérisé en ce que** le dispositif d'aspiration (10a) positionné à la sortie (4), en partie supérieure de la chambre (2), est muni d'un filtre (11) pour nettoyer le résidu (13) d'aérosol (13) après la précipitation des particules solides (12).

7. Collecteur selon des revendications précédentes, **caractérisé en ce que** les éléments chauffants (6) se présentent sous la forme de radiateurs fixés sur la surface extérieure de la chambre (2), le long de l'axe longitudinal de la chambre (2).

8. Procédé de séparation de particules solides (12) des gouttelettes liquides dans l'aérosol (13) au moyen d'un collecteur à colonne (1) selon l'une des revendications précédentes ;
comprenant les étapes dans lesquelles
l'aérosol (13) est introduit dans la chambre (2) du collecteur (1) par l'entrée (3) positionnée en partie basse de la chambre (2),
l'aérosol (13) est forcé de s'écouler dans une direction allant de l'entrée (3) de la chambre (2) vers la sortie (4) de la chambre (2) positionnée en partie haute de la chambre (2), l'aérosol (13) est chauffé par au moins un élément chauffant (6),
le flux d'aérosol (13) est conduit de telle sorte que les particules solides (12) poussées de l'aérosol (13) se déposent sur les chicanes mobiles (5) disposées alternativement les unes au-dessus des autres dans la chambre (2), tandis que
le résidu d'aérosol (13) est évacué au moyen de la sortie (4) positionnée en partie supérieure de la chambre (2),
et les particules solides (12) déposées sur les chicanes mobiles (5) sont éliminées
**caractérisé en ce que**
les particules solides (12) déposées sur les chicanes mobiles (5) sont évacuées grâce aux bords (14) des fentes (9b) positionnées au niveau des parois de la chambre (2) du collecteur (1), les dimensions des fentes (9b) étant adaptées à la taille des chicanes mobiles (5).

9. Procédé selon la revendication 8, **caractérisé en ce que** l'écoulement de l'aérosol (13) est forcé en appliquant un vide à la sortie (4) de la chambre (2).

10. Procédé selon la revendication 8 ou 9, **caractérisé en ce que** l'aérosol (13) est chauffé au moyen de radiateurs (6) fixé sur la surface extérieure de la chambre le long de l'axe longitudinal de la chambre.

11. Procédé selon les revendications 8, 9 ou 10, **caractérisé en ce que** les particules solides (12) déposées sur les chicanes mobiles (5) sont éliminées à l'aide de moyens de nettoyage (9).

12. Procédé selon des revendications précédentes, **caractérisé en ce qu'**il comprend une étape supplémentaire dans laquelle le trajet d'écoulement de l'aérosol (13) est régulé au moyen des déflecteurs mobiles (5) disposés en alternance.
